**Europäisches Patentamt**

**European Patent Office**

**Office européen des brevets**

(19)

(11) **EP 1 274 041 A2**

(12) **EUROPÄISCHE PATENTANMELDUNG**

(43) Veröffentlichungstag:
**08.01.2003 Patentblatt 2003/02**

(51) Int Cl.[7]: **G06K 9/62**

(21) Anmeldenummer: **02010758.7**

(22) Anmeldetag: **14.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **03.07.2001 DE 10132012**

(71) Anmelder: **SIEMENS AKTIENGESELLSCHAFT**
**80333 München (DE)**

(72) Erfinder:
 • **Kuepper, Wolfgang, Dr.**
  **80796 Muenchen (DE)**
 • **Schuster, Matthias**
  **81547 Muenchen (DE)**

(54) **Skalierung von Ähnlichkeitsmassen für ein biometrisches Verfahren**

(57)  Die Erfindung betrifft ein Verfahren zur Skalierung von Ähnlichkeitsmaßen für ein biometrisches Verfahren, wobei die Ähnlichkeitsmaße Maße für die Ähnlichkeit von in dem biometrischen Verfahren zu vergleichenden biometrischen Daten eines Benutzers mit Referenzdaten von Benutzern sind. Die Ähnlichkeitsmaße werden mit einer Mittelwertskalierung skaliert.

**EP 1 274 041 A2**

**Beschreibung**

Die Erfindung betrifft ein Verfahren zur Skalierung von Ähnlichkeitsmaßen für ein biometrisches Verfahren sowie eine Anordnung und ein Programmprodukt zur Ausführung des Verfahrens.

Zur Authentifizierung von Benutzern können biometrische Verfahren angewendet werden, d.h. der Benutzer wird anhand von Körpermerkmalen oder charakteristischen Verhaltensweisen erkannt. Typische Biometrien sind z.B. Sprecher-, Unterschrift-, Handgeometrie-, Fingerabdruck-, Iris- oder Gesichtserkennung. Biometrische Verfahren sind beispielsweise in WO 98/24051, WO 98/25228, WO 98/50880, WO 99/08223 in Form von dynamischen Unterschriftsverifikationen, in DE 19952049 A1 in Form einer Sprecherverifikation und in US 5 533 177, US 5 751 843, US 5 828 779, EP 0 560 779 B1, EP 0 713 592 B1, EP 0 800 145 A2 und WO 98/38533 als Verfahren zur Handerkennung oder zur Bestimmung der Position einer Hand offenbart.

In allen biometrischen Verfahren werden Referenz- und Testmerkmale über die zugehörigen Referenz- und Testdaten miteinander verglichen und anhand von Ähnlichkeitsmaßen entschieden, ob sie vom selben Benutzer stammen. Ähnlichkeitsmaße sind beispielsweise Abstände (Distanzen), sogenannte Kosten, zwischen Referenz- und Testmerkmalen oder -mustern oder sogenannte Scores, welche ein Maß für die Wahrscheinlichkeit der Referenz- und Testmerkmale darstellen, vom selben Benutzer zu stammen. Der Wertebereich der Kosten liegt zwischen Null und einem gewissen Maximalwert, wobei kleine Kosten hoher Ähnlichkeit und große Kosten geringer Ähnlichkeit entsprechen. Die Werte der Scores liegen im Bereich zwischen Null und Eins. Scores von Eins stehen für maximale und Scores von Null für minimale Übereinstimmung. Es werden zwei unterschiedliche Kosten-/Scoreverteilungen unterschieden: Die Verteilungen der zu erkennenden Originale (engl. "genuine distribution") und die der Fälscher (engl. "imposter distribution"), welche zurückgewiesen werden sollten.

Die Werte der Kosten/Scores, welche die Originale und die Fälscher erzeugen, können bei verschiedenen Benutzern sehr unterschiedlich verteilt sein. Diese unterschiedlichen Verteilungen sind auf verschiedene Gründe zurückzuführen:

- Güte des Originals: Fähigkeit des Benutzers, die Referenz reproduzieren zu können
- Varianz in der Art der Testdaten (z.B. Unterschriftslänge bei Unterschriftsverifikation, Passwort bei der Sprecherverifikation)
- Güte der Fälschungen
- Algorithmus der Kostenberechnung

Bei der Gesamtheit dieser benutzerspezifischen Kosten/Scoreverteilungen führt ein globaler Schwellwert für eine Biometrie zu relativ schlechten Ergebnissen bzw. hohen Fehlerraten (Falschakzeptanzrate FAR, Falschrückweisungsrate FRR, Gleichfehlerrate EER).

Um diese Fehlerraten zu minimieren, kann man die berechneten benutzerabhängigen Kosten/Scores benutzerspezifisch auf einen gesamten bzw. gemeinsamen Wertebereich normieren, so dass weiterhin ein globaler Schwellwert für diese Biometrie verwendet werden kann. Das Verwenden benutzerspezifischer Schwellwerte entspricht im Prinzip auch diesem Verfahren, wobei hier die Normierungsparameter in den Schwellwerten bzw. ihrer Berechnung enthalten sind. In diesem Fall werden statt der benutzerabhängigen Normierungsparameter und einer globalen Schwelle die benutzerspezifischen Schwellwerte gespeichert.

Ziel einer benutzerspezifischen Kosten-/Scorenormierung ist es, die Kosten-/Scoreverteilungen der Originale und der Fälscher so gut wie möglich aufeinander abzubilden, um die Originale und Fälscher durch eine globale Schwelle so gut wie möglich voneinander trennen zu können. Da in der Praxis jedoch nur die Kosten/Scores der Originale zur Verfügung stehen, kann eine praktisch umsetzbare Normierung nur durch diese Werte durchgeführt werden. Die Kostennormierung wurde bisher, beispielsweise von Brunelli, R. und Falavigna, D. "Person Identification Using Multiple Cues", IEEE Transactions on Pattern Analysis and Machine Intelligence, Vol. 17, No. 10, 1995, durch Mittelwertverschiebung und/oder Normierung durch die Standardabweichung vorgenommen.

Die Kosten der Originale liegen je nach Benutzer in unterschiedlichen Wertebereichen. Bei der Normierungsmethode der Mittelwertverschiebung werden diese Kostenmittelwerte für alle Benutzer durch eine Kostenverschiebung auf den gleichen globalen Kostenmittelwert abgebildet:

$$K_{normiert} = K_{benutzer} + (\bar{K}_{global} - \bar{K}_{benutzer})$$

mit

$K_{normiert}$ :  normierte Benutzerkosten,
$K_{benutzer}$ :  unnormierte Benutzerkosten,

$\bar{K}_{benutzer}$ :  Mittelwert der unnormierten Benutzerkosten,

$\bar{K}_{global}$ :  Mittelwert der normierten Benutzerkosten.

Die Normierung der Scores kann analog durchgeführt werden.

Bei der Mittelwertverschiebung und Skalierung mit Standardabweichung werden die Kosten mittelwertfrei gemacht und durch die Streuung der jeweiligen Benutzerkosten normiert:

$$K_{normiert} = \frac{(K_{benutzer} - \bar{K}_{benutzer})}{\sigma_{benutzer}}$$

mit

$\sigma_{benutzer}$ : Streuung bzw. Standardabweichung der unnormierten Benutzerkosten.

Auch hier kann die Normierung der Scores analog durchgeführt werden.

Beispiele zeigen, dass bei einer Normalisierung durch Verschiebung der Kosten- bzw. Scoremittelwerte der Originale die Verbesserung der Fehlerraten weniger gut ist als bei einer zusätzlichen Normierung durch die Standardabweichung. Da in der Praxis jedoch häufig nur sehr wenige Referenzmerkmale zur Verfügung stehen, sind die Standardabweichungen weniger zuverlässig als die Mittelwerte.

Der Erfindung liegt die Aufgabe zugrunde, ein Verfahren zur Skalierung der Ähnlichkeitsmaße zu entwickeln, bei dem die geschilderten Nachteile vermieden werden.

Diese Aufgabe wird durch ein multimodales biometrisches Verfahren, eine Anordnung und ein Programmprodukt mit den Merkmalen der unabhängigen Ansprüche gelöst.

In dem Verfahren werden die Ähnlichkeitsmaße mit einer Mittelwertskalierung skaliert. Dazu werden zunächst die Mittelwerte der Kosten aller Benutzer zu einem gemeinsamen globalen Mittelwert der Ähnlichkeitsmaße aller Benutzer verrechnet. Der Skalierungsfaktor bei der Mittelwertskalierung ist dann dieser globale Mittelwert der Ähnlichkeitsmaße aller Benutzer geteilt durch den Mittelwert der Ähnlichkeitsmaße des jeweiligen Benutzers. Die skalierten Ähnlichkeitsmaße des jeweiligen Benutzers ergeben sich schließlich aus der Multiplikation der unskalierten Ähnlichkeitsmaße des jeweiligen Benutzers mit diesem Skalierungsfaktor.

Auf die Berechnung der Mittelwerte der Kosten aller Benutzer zu einem gemeinsamen globalen Mittelwert der Ähnlichkeitsmaße aller Benutzer kann auch verzichtet werden, da diese Skalierung lediglich den Mittelwert von Eins auf den Mittelwert für alle Benutzer skaliert. In diesem Fall erspart man sich die Berechnung und Speicherung des gemeinsamen globalen Mittelwertes.

Für das erfindungsgemäße Verfahren zur Skalierung von Ähnlichkeitsmaßen brauchen also nur die Mittelwerte der Ähnlichkeitsmaße verwendet zu werden, nicht dagegen die Standardabweichungen. Trotzdem werden, wie weiter unten an einem Beispiel gezeigt wird, bei den Fehlerraten gute Ergebnisse erzielt.

Die Ähnlichkeitsmaße der Originale werden nicht durch Verschiebung, sondern durch Skalierung der Mittelwerte aufeinander abgebildet. Die Standardabweichung wird nicht in die Skalierung mit einbezogen. Das Verfahren ist daher weniger anfällig bei einer geringen Anzahl der für die Skalierung zur Verfügung stehenden Ähnlichkeitsmaße. Außerdem erspart man sich die Berechnung und die Speicherung der Standardabweichungen. Das erfindungsgemäße Verfahren ist somit zum einen weniger aufwendig, da die Standardabweichung nicht berechnet werden muss, und führt zudem zu geringeren Fehlerraten als die bisher verwendeten.

Werden keine weiteren Umrechnungen der skalierten Ähnlichkeitsmaße vorgenommen, so erhält man nach dem obigen Verfahren bereits normierte Ähnlichkeitsmaße. Dies ist insbesondere für den Vergleich und die Verrechnung von unterschiedlichen Ähnlichkeitsmaßen, etwa bei multimodalen Biometrien, vorteilhaft.

Vorzugsweise enthalten oder sind die Ähnlichkeitsmaße Kosten und/oder Scores.

Eine Anordnung, die eingerichtet ist, eines der geschilderten Verfahren auszuführen, lässt sich zum Beispiel durch entsprechendes Programmieren und Einrichten eines Computers oder einer Rechenanlage realisieren.

Ein Programmprodukt für eine Datenverarbeitungsanlage, das Softwarecodeabschnitte enthält, mit denen eines der geschilderten Verfahren auf der Datenverarbeitungsanlage ausgeführt werden kann, lässt sich durch geeignete Implementierung des Verfahrens in einer Programmiersprache und Übersetzung in von der Datenverarbeitungsanlage ausführbaren Code ausführen. Die Softwarecodeabschnitte werden dazu gespeichert. Dabei wird unter einem Programmprodukt das Programm als handelbares Produkt verstanden. Es kann in beliebiger Form vorliegen, so zum Beispiel auf Papier, einem computerlesbaren Datenträger oder über ein Netz verteilt.

Weitere wesentliche Vorteile und Merkmale der Erfindung ergeben sich aus der Beschreibung eines Ausführungsbeispiels anhand der Zeichnung. Dabei zeigt

Figur 1    eine Kostenverteilungen der Originale und Fälscher für einen ersten Benutzer;
Figur 2    eine Kostenverteilungen der Originale und Fälscher für einen zweiten Benutzer;

Figur 3    eine unnormierte Kostenverteilung der Originale und Fälscher für mehrere Benutzer (Summe der einzelnen Kostenverteilungen);

Figur 4    resultierende Fehlerraten für globale Schwellwerte ohne Normierung für mehrere Benutzer;

Figur 5    die Kostenverteilung bei der Mittelwertverschiebung für mehrere Benutzer;

Figur 6    die Fehlerraten bei der Mittelwertverschiebung für mehrere Benutzer;

Figur 7    die Kostenverteilung bei der Mittelwertverschiebung und Skalierung mit Standardabweichung für mehrere Benutzer;

Figur 8    die Fehlerraten bei der Mittelwertverschiebung und Skalierung mit Standardabweichung für mehrere Benutzer;

Figur 9    die Kostenverteilung bei der Mittelwertskalierung für mehrere Benutzer;

Figur 10    die Fehlerraten bei der Mittelwertskalierung für mehrere Benutzer und

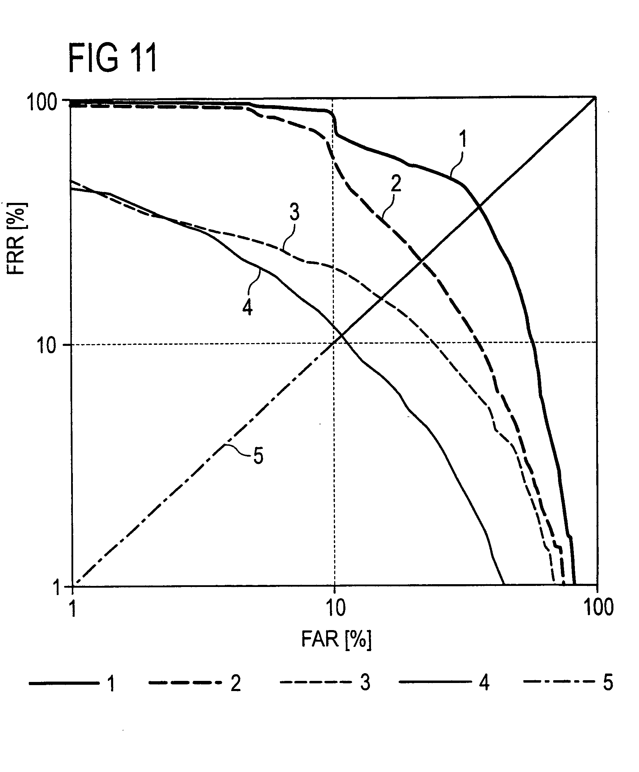

Figur 11    ein ROC-Diagramm (Receiver Operating Characteristic) mit und ohne Normierungen für mehrere Benutzer.

Das erfindungsgemäße Verfahren zur Skalierung von Ähnlichkeitsmaßen in Form von Kosten/Scores verwendet die Mittelwerte der Ähnlichkeitsmaße der Originale, um die Ähnlichkeitsmaße aufeinander abzubilden.

Es sei am Beispiel der Normierung von Kosten erläutert. Die Mittelwerte der Kosten aller Benutzer werden zunächst zu einem gemeinsamen globalen Kostenmittelwert verrechnet. Der Normierungsfaktor der Kosten des jeweiligen Benutzers ist dann der globale Mittelwert der Kosten aller Benutzer geteilt durch den Mittelwert der Kosten des jeweiligen Benutzers:

$$K_{normiert} = \frac{K_{benutzer} \cdot \bar{K}_{global}}{\bar{K}_{benutzer}}$$

Tests mit Beispielbiometrien haben gezeigt, dass diese Methode bessere Ergebnisse liefert als die oben vorgestellten Normalisierungsverfahren durch Mittelwertverschiebung und/oder Normierung durch die Standardabweichung. Auch mit nur sehr wenigen zur Verfügung stehenden Referenzen, welche ausschließlich zur Normierung verwendet werden, werden durch dieses Verfahren noch sehr geringe Fehlerraten erreicht.

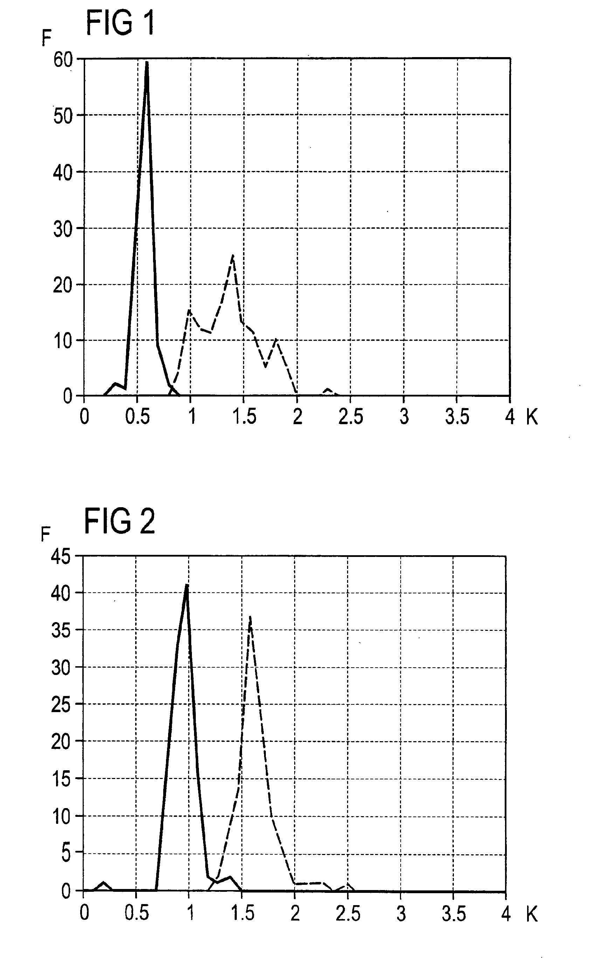

Das Verfahren zur Skalierung von Ähnlichkeitsmaßen durch die Mittelwertskalierung und seine Vorteile werden im Folgenden anhand einer beispielhaften Biometrie vorgestellt. Die Figuren 1 und 2 zeigen die Kostenverteilungen der Originale (durchgezogen) und der Fälscher (gestrichelt) für zwei unterschiedliche Benutzer bei dieser Biometrie. Aufgetragen ist jeweils die Anzahl F über den Kosten K. Es ist zu sehen, dass, abhängig vom Benutzer, die Werte der Originale und der Fälscher in unterschiedlichen Wertebereichen liegen.

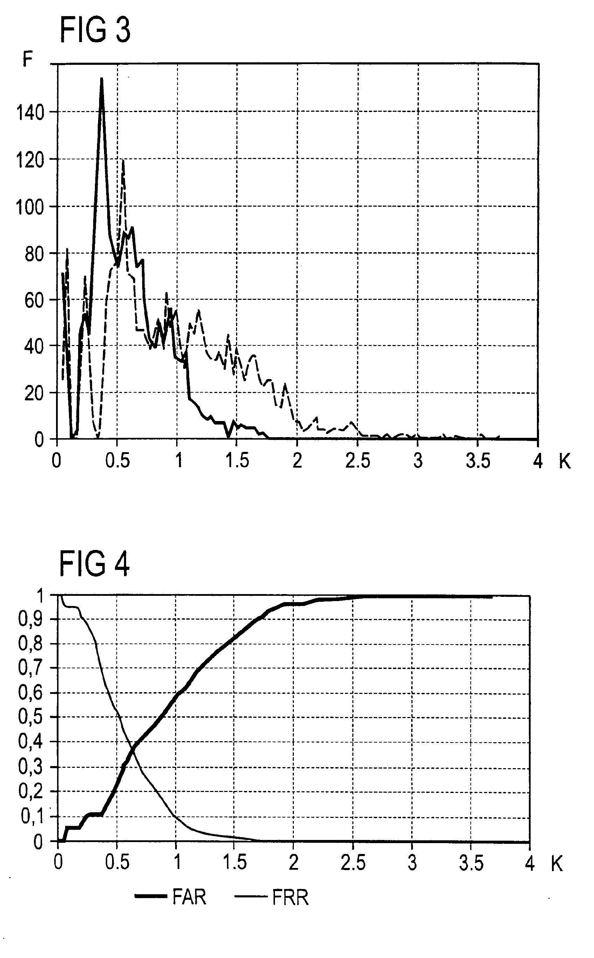

Die unnormierten Kostenverteilungen aller Benutzer für Originale (durchgezogen) und Fälscher (gestrichelt) und die resultierenden Fehlerraten (Ordinate) bei globalen Schwellwerten sind für diese beispielhafte Biometrie in den Figuren 3 und 4 dargestellt. Bei der hier untersuchten Biometrie liegt die Gleichfehlerrate (EER) ohne Normierung bei ca. 37 %.

Für diese beispielhafte Biometrie werden die Kosten der Originale und die der Fälscher mit den verschiedenen vorgestellten Verfahren (Mittelwertverschiebung, Mittelwertverschiebung und Skalierung durch Standardabweichung, Mittelwertskalierung) normiert. Zur Normierung werden nur die Kosten der Originale verwendet, welche zur Referenzbildung (beim sogenannten Enrollment) herangezogen wurden. Anschließend wird untersucht, welche Fehlerraten sich nach der Normierung für globale Schwellen bei den unterschiedlichen Verfahren einstellen.

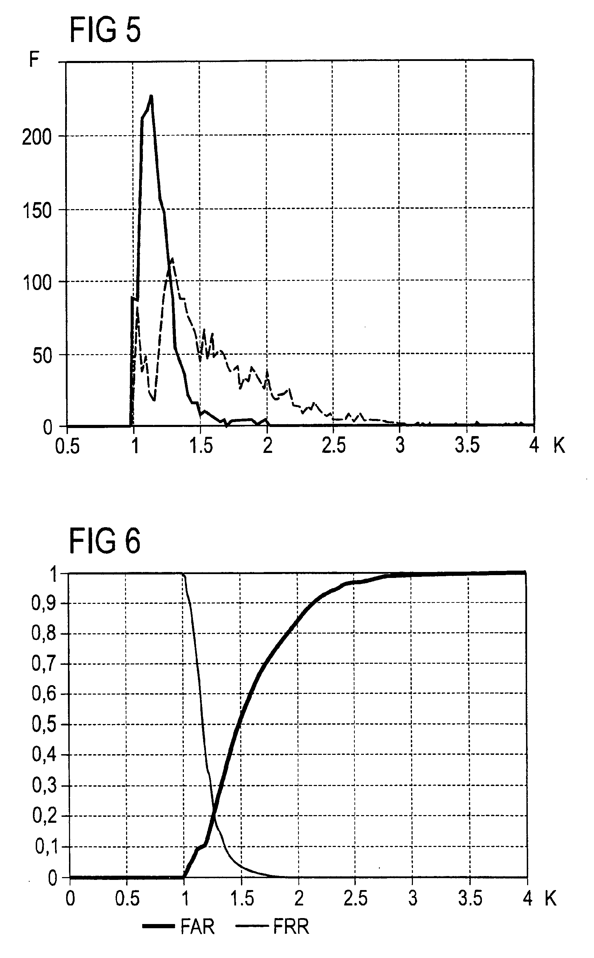

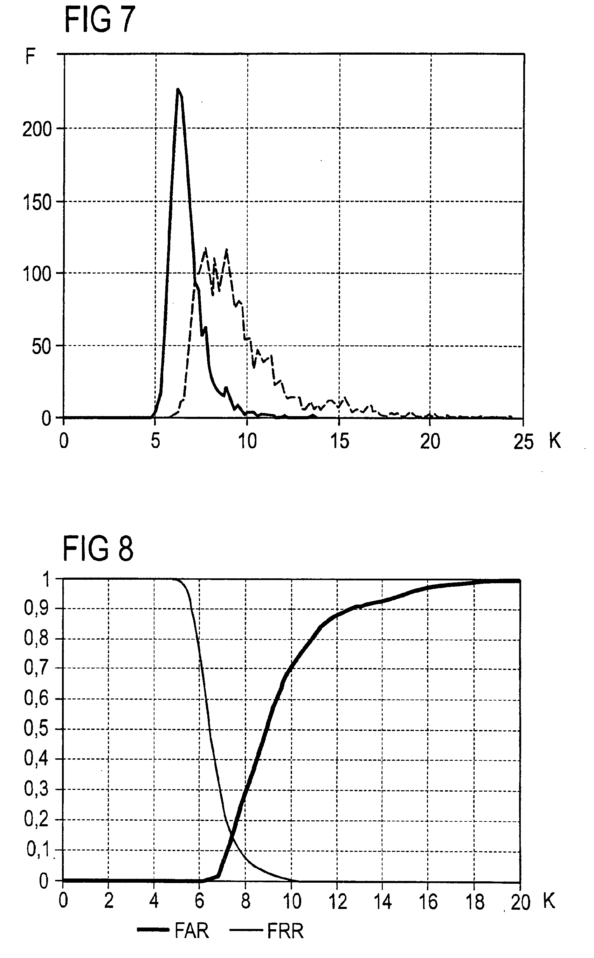

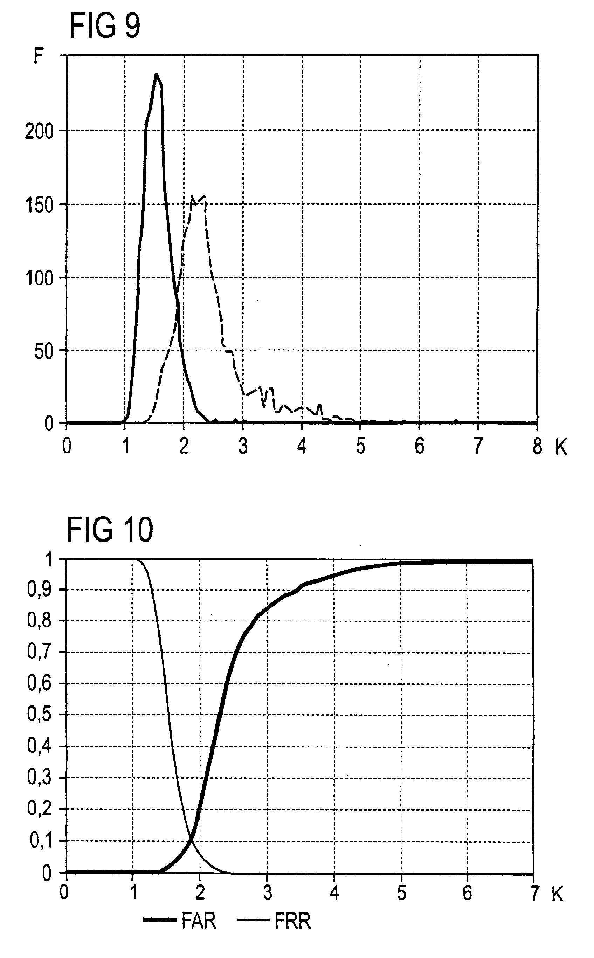

Die Figuren 5 bis 10 zeigen die Kostenverteilungen der Originale und der Fälscher bei allen Benutzern und die resultierenden Fehlerraten in Abhängigkeit von globalen Kostenschwellen nach der Normierung durch die unterschiedlichen Verfahren.

Die Gleichfehlerraten EER ohne Normierung und mit den verschiedenen Normierungsverfahren sind aus der Tabelle abzulesen.

| Normierungsverfahren | EER |
| --- | --- |
| Ohne Normierung | 37,1 % |
| Mittelwertverschiebung | 22,7 % |
| Mittelwertverschiebung und Skalierung mit Standardabweichung | 16,1 % |
| Mittelwertskalierung | 11,9 % |

Die Receiver Operating Characteristic (das ROC-Diagramm) für diese Fälle ist in folgendem Diagramm 11 dargestellt. Dabei hat für Kurve 1 keine Normierung stattgefunden, für Kurve 2 eine Normierung mit der Mittelwertverschiebung, für Kurve 3 eine Normierung mit der Mittelwertverschiebung und Skalierung mit Standardabweichung und für Kurve 4 eine Normierung mit der Mittelwertskalierung. Kurve 5 ist die EER-Linie.

Alle Normierungsverfahren erzeugen eine kleinere EER als ohne Normierung. Die hier vorgestellte Normierung durch die Mittelwertskalierung erzeugt die niedrigsten und daher besten EER-Werte. Aus dem ROC-Diagramm ist zu entnehmen, dass diese Methode bei allen FAR-Werten bessere oder wenigstens gleich gute FRR-Werte wie die bisher verwendeten Normierungsverfahren liefert.

Die Methode der Kombination aus Mittelwertverschiebung und Skalierung durch die Standardabweichung bewirkt zwar ähnlich gute Verbesserungen bezüglich der Fehlerraten, jedoch ist diese Methode extrem abhängig von der Güte der berechneten Standardabweichungen. Mögliche Ausreißer bei wenigen Referenzmustern, was in der Praxis regelmäßig der Fall ist, wirken sich viel stärker auf die Standardabweichungen als auf den Mittelwert aus und können dann zu hohen Fehlerraten führen.

**Patentansprüche**

1. Verfahren zur Skalierung von Ähnlichkeitsmaßen für ein biometrisches Verfahren, wobei die Ähnlichkeitsmaße Maße für die Ähnlichkeit von in dem biometrischen Verfahren zu vergleichenden biometrischen Daten eines Benutzers mit Referenzdaten von Benutzern sind,
   **dadurch gekennzeichnet,**
   **dass** die Ähnlichkeitsmaße mit einer Mittelwertskalierung skaliert werden.

2. Verfahren nach Anspruch 1,
   **dadurch gekennzeichnet,**
   **dass** die Ähnlichkeitsmaße mit der Mittelwertskalierung normiert werden.

3. Verfahren nach zumindest einem der vorhergehenden Ansprüche,
   **dadurch gekennzeichnet,**
   **dass** die Ähnlichkeitsmaße Kosten enthalten.

4. Verfahren nach zumindest einem der vorhergehenden Ansprüche,
   **dadurch gekennzeichnet,**
   **dass** die Ähnlichkeitsmaße Scores enthalten.

5. Anordnung, die eingerichtet ist, ein Verfahren nach zumindest einem der vorhergehenden Ansprüche auszuführen.

6. Programmprodukt für eine Datenverarbeitungsanlage, das Softwarecodeabschnitte enthält, mit denen ein Verfahren nach zumindest einem der vorhergehenden Ansprüche auf der Datenverarbeitungsanlage ausgeführt wird.

FIG 1

FIG 2

FIG 3

FIG 4

FAR    FRR

FIG 5

FIG 6

## FIG 7

## FIG 8

— FAR — FRR

## FIG 9

## FIG 10

FAR ____ FRR

## FIG 11